# EUROPEAN PATENT SPECIFICATION

(11) **EP 2 098 112 B1**
(45) Date of publication and mention of the grant of the patent: **31.08.2011**
(21) Application number: 09075086.0
(22) Date of filing: 27.02.2009
(51) Int. Cl.: A01K 1/12, A01K 3/00

(54) **Assembly for and method of grazing**
Abgrasanordnung und -verfahren
Ensemble et procédé de pâturage

(30) Priority: 06.03.2008 NL 1035137
(43) Date of publication of application: 09.09.2009
(73) Proprietor: Lely Patent N.V., 3147 PA Maassluis (NL)
(72) Inventor: Pastoor, Jan Lambertus, 3147 PA Maassluis (NL); Van Kuilenburg, Jan Martinus, 3147 PA Maassluis (NL); Vlaar, Iwan Yves, 3147 PA Maassluis (NL); Van den Berg, Karel, 3147 PA Maassluis (NL)
(74) Representative: Postma, Robert Erwin

(56) References cited:
- NL-C- 1 013 349
- US-A- 6 062 165

## Description

### BACKGROUND OF THE INVENTION

The invention relates to an assembly for grazing and a method of grazing, in particular for dairy cattle.

It is known to have dairy cattle stay for a long time in one and the same grazing area (set stocking). It is also known to change the grazing area for dairy cattle. According to one known method, this takes place by paddock grazing, in which case the dairy cattle is regularly moved to another, remote, grazing area, in particular a pasture. According to another known method, this is done by strip grazing, in which case fresh grass land is screened from the animals by a displaceable delimitation (demarcation), in particular an electric fence. In Dutch patent 1013349 it is proposed to displace the delimitation wire by means of two self-propelled wire holders which, on the one hand, tension the delimitation wire between them and, on the other hand, are able to haul in a delimitation wire which extends in the direction of displacement, in order to be displaced thereby. Alternatively, the self-propelled holders are able to follow a fixed delimitation wire, by means of wire followers which are provided on said holders. The animals follow the displacement because, by means of the displacement of the delimitation wire, fresh grass is regularly made available. The self-propelled holders may, in the case of such strip grazing, subsequently be used for driving the animals back in order to guide them to the pasture exit or to a milking station situated there.

In Dutch patent 1013349 there is also shown a grazing method in which four self-propelled wire holders and one stationary wire holder define a pentagonal grazing area, whose shape and location relative to the stationary wire holder may be adapted by activating the self-propelled wire holders. For complete paddock grazing the stationary wire holder should be displaced.
In United States patent US 6, 062, 165 a farming system is disclosed according to the preamble of claim 1.

### SUMMARY OF THE INVENTION

An object of the invention is to provide an assembly for and/or a method of grazing by means of which the milking process can smoothly follow the grazing.

An object of the invention is to provide an assembly for and/or a method of grazing which are/is multifunctional in use.

An object of the invention is to provide an assembly for and/or a method of grazing by means of which the movements of the cattle can be managed to a great extent.

An object of the invention is to provide an assembly for and/or a method of grazing which can be autonomous to a great extent and/or which can be performed autonomously to a great extent.

An object of the invention is to provide an assembly for and/or a method of grazing which enable to graze throughout the year.

An object of the invention is to provide an assembly for and/or a method of grazing which require a limited human intervention.

An object of the invention is to provide an extremely dynamic method of grazing.

In order to achieve at least one of these objects, the invention provides, from one aspect, an assembly according to claim 1.The milking station thus constitutes part of a dynamic delimitation, whose location and shape can be changed. By activating the self-propelled holders, in particular wire holders, it is possible to guide the dairy cattle in a simple and reliable manner to desired grazing spots and/or to the milking station.

The one sub-grazing-area may, for example, be in use and the other one may, for example, not be in use, in order to allow the crop to grow or to segregate a part of the cattle from the other.

If the holders with the delimiting elements extending therebetween also define a sub-area which is separated from the rest of the grazing area, said separated sub-area may be remote from the cattle entrance of the milking station, in order to segregate a part of the cattle that is no dairy cattle.

It should be noted that by "directly connected holders" the situation is meant in which two holders are interconnected by a delimiting element without intervention of another holder. In the case of "indirectly connected holders", there may be situated between two holders a third holder which is directly connected to said two holders.

The delimiting element may be flexible in a manner known per se and at least one of the holders may be provided with means for hauling in/letting out a length of delimiting element and/or for tensioning the delimiting element.

In an embodiment, the milking station is directly connected, by means of a delimiting element, to at least two of the other holders. In that case, the milking station can be situated somewhat centrally in the assembly.

In an embodiment, the milking station is connected directly or indirectly, by means of delimiting elements, to at least three of the other holders, in which case the possibilities of guiding the cattle are increased.

In the case that all the holders that are remote from the milking station are self-propelled first vehicles, guiding the cattle to the milking station is facilitated.

In an embodiment, the first vehicles and the milking station with the delimiting elements extending therebetween define at least one entirely separated grazing area, in particular a polygon.

In a further development thereof, the holder which is implemented as a milking station is directly connected, by delimiting elements, to at least three of the other holders. The milking station may in this case form a passage for the dairy cattle between both sub-grazing-areas. If the assembly is in this case provided with means for establishing a selected one-way route for the dairy cattle through the passage, the movements of the cattle can be guided additionally. It is, for example, possible to prevent passage from the one sub-grazing-area to the other if the latter area offers insufficient crop or if that area is intended to be used for another purpose, for example for another herd.

There may be disposed a milking device in the passage, so that during passing from the one sub-grazing-area to the other, a milking can take place. The aforementioned one-way means prevent in this case the milked animal from making a return movement.

The assembly may be provided with means for closing the entrance to the milking station from one selected sub-grazing-area and with means for selectively operating the closing means.

In order to achieve at least one of the aforementioned objects, the invention provides, from another aspect, an assembly for delimiting a grazing area for dairy cattle, comprising a delimitation which extends around the grazing area and which is formed by a number of delimiting elements, which are successive in the direction of delimitation, and by a number of holders, which are spaced apart in the direction of delimitation, for the successive delimiting elements, wherein the holders comprise a number of self-propelled first vehicles and a milking station. The assembly may further be provided with one or more delimiting elements which extend between non-successive holders.

In an assembly according to the invention, the milking station may constitute part of a self-propelled second vehicle, wherein the milking station is preferably disposed on a frame which is provided with appropriate driving means. The milking station itself is in this case self-propelled and may be actively involved in the manipulation of the grazing area, in location, shape, magnitude and/or lay-out, and in the control of the cattle.

The milking station may be arranged for one or more central care functions. The milking station may, for example, be provided with a power supply for the self-propelled holders. The milking station may also be provided with a drinking water supply, a storage tank and rinsing water for washing the milk lines and the milk storage. The milking station may further be provided with a storage and a means for offering concentrate.

At least one of the holders, in particular, is provided with a programmable control unit for mutually attuned activation and, preferably, also control of the self-propelled holders.

In an embodiment thereof, the assembly is provided with means for determining the number of animals of the dairy cattle in a grazing area defined by the holders, wherein the control unit is arranged to activate and control the self-propelled holders in dependence on the determined number.

The assembly may also be provided with means for determining the surface area of the grazing area defined by the holders, which means are operatively connected to the control unit. The means for determining the surface area of the grazing area defined by the holders may comprise means, provided on one or more of the holders, for measuring the angle between delimiting elements emanating from the respective holder. Alternatively, the means for determining the surface area of the grazing area defined by the holders may comprise means, provided on one or more of the holders, for measuring the distance between one or more pairs of holders. Alternatively, the means for determining the surface area of the grazing area defined by the holders may comprise means, provided on one or more of the holders, for determining the position of the holder in the horizontal plane, such as a GPS system.

In an embodiment with the control unit, the assembly is provided with means for determining a condition of the grazing land in a grazing area defined by the holders, wherein the control unit is arranged to activate and control the self-propelled holders in dependence on the determined condition. Said condition may, for example, be determined by locally measuring a value which is indicative of the amount of vegetation. Alternatively, said condition may be the local height of the terrain. Alternatively, said condition may be the moisture content of the air or the ground.

In order to achieve at least one of the aforementioned objects, the invention provides, from another aspect, an assembly for delimiting a grazing area for cattle, comprising a delimitation which extends around the area and which is formed by a number of delimiting elements, which are successive in the direction of delimitation, and by a number of holders, which are spaced apart in the direction of delimitation, for the successive delimiting elements, wherein all the holders are self-propelled. Owing to this, it is possible to displace the area as a whole, gradually, slowly, attuned to crop consumption, or at larger intervals to a remote location, for example when a grazing area has been completely consumed. The holders may comprise a number of self-propelled first vehicles and a self-propelled second vehicle with milking station. The assembly may comprise at least three first vehicles, wherein the second self-propelled vehicle with milking station is connected to both adjacent first vehicles as well as to another one of the first vehicles.

In order to achieve at least one of the aforementioned objects, the invention provides, from another aspect, a method of pasturing grazing land with dairy cattle, wherein a grazing area is enclosed by means of an assembly according to the invention, and the position of one or more of the holders is adapted by activation of said holders The activation may, for example, take place in dependence on a count of the number of animals of the cattle and/or in dependence on a condition measurement of the vegetation in the grazing area, such as the amount of vegetation or the moisture content of the air or the ground.

In an embodiment of the method according to the invention, the mutual position of the holders can be monitored and the activation of the holders can take place at least on the basis of these data.

If all the holders are self-propelled, they can all be activated for displacement together with the cattle which is enclosed by the assembly, as indicated above at intervals or on a continuous basis.

The aspects and measures described in this description and the claims of the application and/or illustrated in the figures of this application can, where possible, also be applied separately. These separate aspect may be the subject of divisional patent applications to this effect. This applies in particular to the measures and aspects which have been described as such in the subclaims.

### SHORT DESCRIPTION OF THE FIGURES

The invention will be explained with reference to a number of exemplary embodiments illustrated in the attached figures; in which:
Figure 1 shows a diagrammatic top view of an example of an assembly according to the preamble of claim 1.
Figures 2A-C show a milking station for an embodiment of an assembly according to the invention, in side view, in end view and in cut-away top view, respectively.
Figures 3 and 3A show a front view of a self-propelled wire holder for an embodiment of an assembly according to the invention and a detail thereof, respectively, and
Figures 4A-D show diagrammatic top views of a few possible embodiments of an assembly according to the invention and the use thereof.

### DETAILED DESCRIPTION OF THE FIGURES

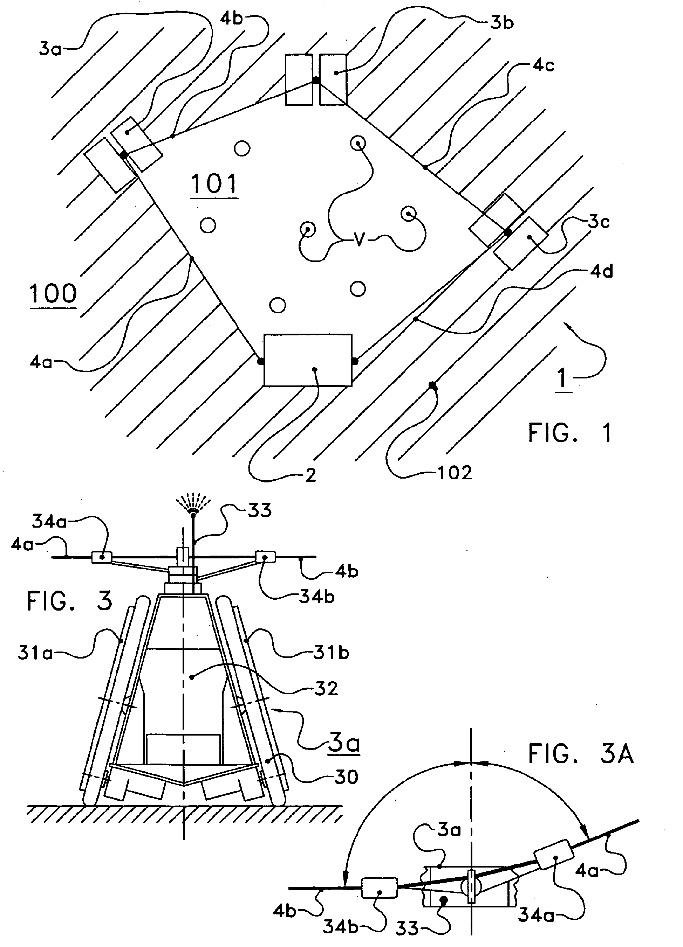

Figure 1 shows a pasture or a wide grazing land, such as a prairie 100, with a fixed reference point 102. An assembly 1 according to the preamble of claim 1 encloses a grazing area 101 for cattle V. For this purpose, the assembly 1 comprises a holder which is implemented as a self-propelled milking station 2 and, in this example three, self-propelled holders 3a,3b,3c, wires 4a,4b,4c,4d being tensioned between the holders 2 and 3a,3b,3c. The holders 2, 3a,3b,3c and the wires 4a,4b,4c,4d form a quadrangle.

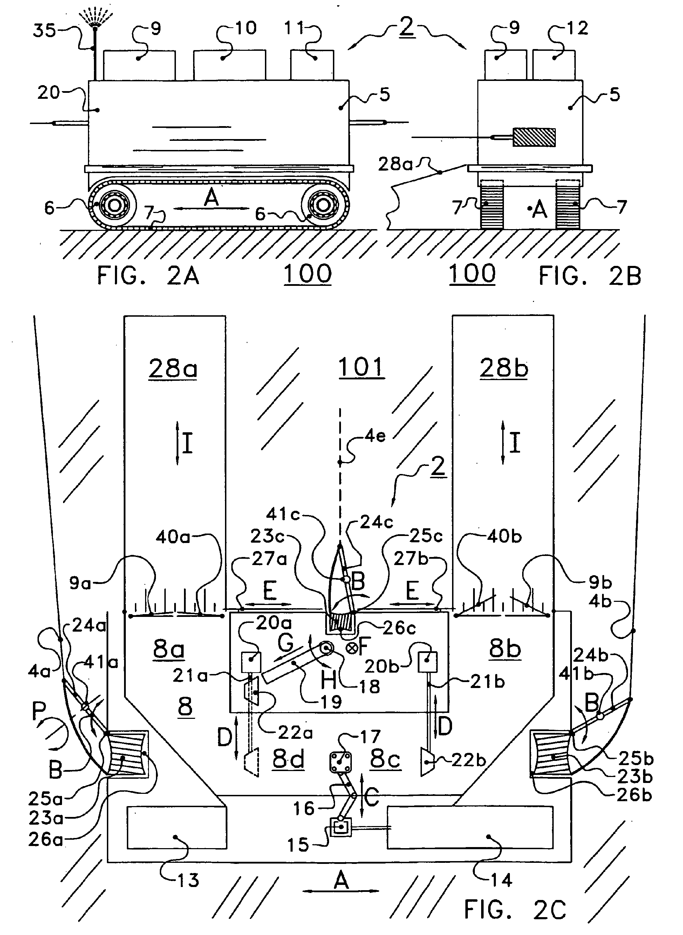

The milking station 2 in Figures 2A-C comprises a frame 5 with a set of caterpillar tracks 7 which run around wheels 6 and which are drivable in, for example, directions A by means of a motor (not further shown) which is supported on the frame. Alternatively, the frame 5 may be disposed on one or more rotatable wheel sets with driven wheels, or the like, for an optimum manoeuvrability. The frame 5 comprises a construction 20 on which are disposed an energy supply 9, such as an accumulator or a generator, a concentrate storage container 10, a water storage container 11 and a fuel storage container 12. PV panels (not shown) may also be disposed on the construction 20, for energy supply.

Inside the construction 20 there is provided a passage 8 for cattle, with entrance areas 8a,8b which are accessible via openings 9a,9b which can be closed by means of sliding doors 27a,27b which are slidable in directions E. The openings 9a,9b are accessible for cattle from outside via entrance slopes 28a,28b, directions I. In the openings 9a,9b there may be provided swing gates 40a,40b which are provided with a counter and which, if desired, can also be brought into an open position or into a one-way swing position.

Inside the construction 20 there is further provided a control unit 13 provided with (not shown) programming and data input means and a transmitter/receiver 35. The functions in the assembly 1 are controlled by means of the control unit 13.

An arm 16 of a milking robot 15 to be controlled by the control unit 13, which arm is provided with a holder 17 with teat cups, may extend into the passage 8. The arm 16 is movable in the directions C, between a storage position and a use position. The robot is centrally positioned, so that it can be used when an animal is standing in the milk stand 8c or in the milk stand 8d.

In order to determine the position for the milk stands 8c,8d, the construction 20 is further provided with (concentrate) feed troughs 22a,22b which are supported on arms 21a,21b which are able to be moved by robots 20a,20b in directions D between a use position and a storage position (indicated by dashed lines). The troughs are filled with concentrate via stand duct 18 coming (direction F) from the storage container 10, and metering channel 19 which is rotatable (directions H) between two filling positions. Feed metering, movement of the metering channel and the feed troughs are controlled by the control unit 13. For milking and offering feed there may be used presence detectors which detect an animal and its position in the areas 8a, 8b, 8c and/or 8d and which are operatively connected to the control unit 13.

At its outer side the construction 20 is provided on three sides with boxes 26a,26b,26c for wire reels 23a,23b,23c on which delimitation wires (electrified wire) 4a,4d,4e can be wound and unwound, driven by motors (not shown) which are controlled by the control unit. For example, if the wires 4a-d form one continuous wire, it will suffice to use wire reel 23a or 23b instead of both 23a and 23b. In this example, in addition, spacer arms 24a,24b,24c are, in the region of 25a,25b,25c, attached to the construction 20 so as to be pivotable (directions B and P) about horizontal and vertical axes. Pivots 41a,41b,41c having a horizontal pivot axis are provided, too, in the arms 24a,24b,24c. The spacer arms 24a,24b,24c guide, at their outer ends, the wires 4a,4d,4e and provide locally, if required, additional space at the construction 20. The arms 24a,24b,24c may be driven for rotation by motors (not shown) which are controlled by the control unit. The reels 23a,23b,23c are provided with gauges (not shown) by means of which the length of wire let out or hauled in can be determined and be transmitted to the control unit 13.

The self-propelled wire holder 3a (substantially equal to wire holders 3b and 3c) comprises a frame 30 with separately drivable wheels 31a,31b and a drive motor 32 for driving them. The motor 32 may be fed from the milking station 2 by implementing one or more of the wires 4a, etcetera as a double conductor, as described in the above-mentioned document NL 1013349. If the wires 4a,4b,4c,4d have ends, they may be connected with one end, in the case of the aforementioned reel, if desired via a revolving contact, to a contact point in the respective wire holder, for the feeding of that wire holder. The beginning of the wire which runs to the next wire holder is electrically connected to that contact point for feeding the next wire holder(s), etcetera.

The self-propelled wire holders 3a, etcetera may also be provided with PV panels for self-feeding, and/or chargeable accumulators. For remote control from the control unit 13 the wire 4a, etcetera may also be provided with an appropriate conductor, or a transmitter/receiver 33 may be provided for receiving control signals from the control unit 13 for controlling the motor 32 and the drives of the wheels 31a,31 b.

The frame 30 carries, in this example, a wire angle gauge 34a,34b by means of which, as indicated in Figure 3A, the angle between wire section 4a and wire section 4b can be determined, as described in the aforementioned document NL 1013349. For the transmission of measured values to the control unit 13 the transmitter/receiver 33 is used.

The frame 30 may additionally - or alternatively - be provided with a plate (not further shown) which can be lowered in a sliding manner along a rod which is placed with its lower end against the ground (and which can be put into and out of operation from the frame 30) so as to be supported on the crop, whereafter the position of the plate along the rod is a measure for the height or the condition of the grass (degree to which it is treaded by cattle). The measured values can be transmitted to the control unit 13 via the transmitter 33.

The frame 30 may additionally - or alternatively - be provided with hygrometers (not further shown) which determine the moisture content of the ground or the crop, the measured values being transmitted to the control unit 13 via the transmitter 33 and the receiver 35.

The wires 4a,4b,4c,4d may be formed as one continuous wire which can be lengthened or shortened by operating the reels 23a,23b. However, one or more self-propelled wire holders 3a,3b,3c may be provided with a reel for the wire 4a, etcetera, and with a fixed fastening for the end of the wire in the next side of the quadrangle. Alternatively, a wire holder 3 may be provided with two or more reels, one for each wire. For each reel there will be provided a drive on the wire holder, and, if desired, gauges for the length of wire hauled in or let out. The data thereof can be transmitted to the control unit 13 via the transmitter 33 and the receiver 35. In these cases an (almost) entirely circumferential wire is not involved.

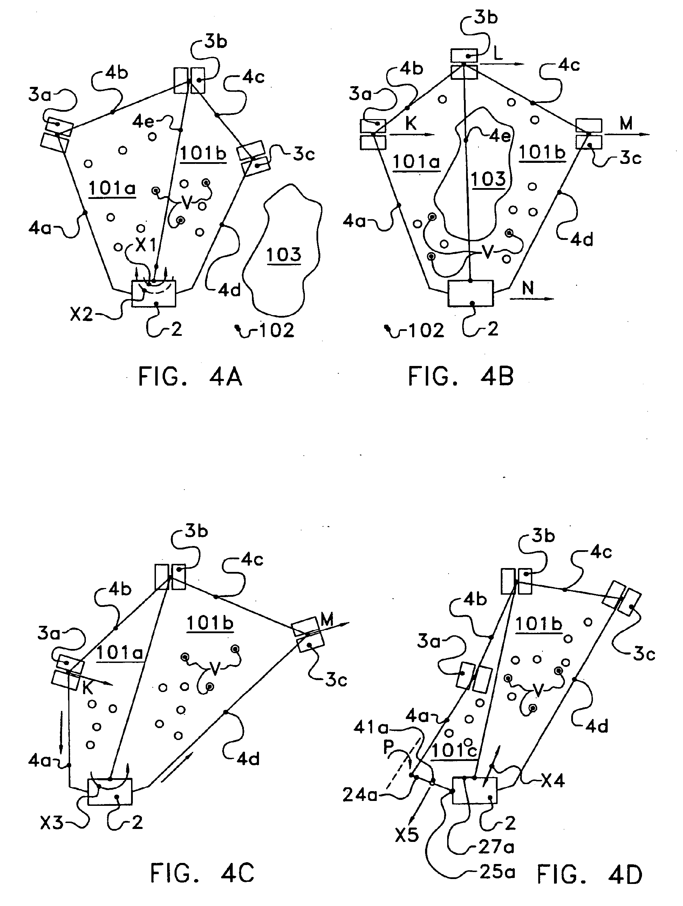

Figure 4A shows an assembly which corresponds to a great extent to the arrangement of Figure 1. However, in this case and according to the invention, the wire 4e is used, which directly connects the milking station 2 to the wire holder 3b. As a result, the grazing area 101 is divided into two sub-grazing-areas 101a,101b. The cattle V can move via the milking station, passage 8, from the one sub-grazing-area to the other sub-grazing-area, see arrows X1 and X2.

When, for example, it is detected through the aforementioned measurements that the vegetation in the sub-grazing-areas 101a,101b comes below a particular value stored in the computer of the control unit, the control unit may activate the self-propelled holders, including the milking station, and control them (arrows K, L, M, N) in order to move the entire assembly to a remote area, see for example Figure 4B, which has another position relative to reference point 102.

The same action may be taken if it results from the aforementioned measurements that the moisture content of the vegetation and/or the ground is so high that there is a swampy condition. In order to prevent damage of the grazing area and/or problems for the cattle, the control unit may activate the self-propelled holders, including the milking station, and control them to move the assembly to a dryer, for example higher situated area 103 (Figure 4B). The hygrometers detect the arrival at the drier area. The control unit 13 may be programmed beforehand in such a manner that the self-propelled holder (here 3c), which is the first to detect a sufficiently dry terrain, will continue to drive over a certain distance. Alternatively, the control unit 13 may be programmed in such a manner that the displacement is only completely stopped if all the hygrometers (on all the holders) measure a sufficiently low moisture content.

On the basis of the measured data from the wire angle gauges, the wire length gauges and/or the position gauges, the control unit can follow the exact relative and absolute positions of the holders and determine therefrom the shape, size and position of the assembly and of the grazing area which is enclosed thereby.

This dynamic, interactive management may also take place by means of the arrangement of Figure 1. For the arrangements of Figures 1 and 4A, the control unit may also be set by default to displace the grazing area, together with cattle present therein, gradually, continuously or stepwise, at least one or more of the wires 4a-d, in order regularly to make fresh grass land available. The speed of adaptation may be attuned to the number of animals of the cattle (and the grazing behaviour) in the grazing area or the relevant sub-grazing-area. By regular displacement treading of the terrain is prevented.

If the choice is made to have the cattle stay first in the one sub-grazing-area 101a and to admit them to the other sub-grazing-area 101b only after the former one has been consumed, the control unit may be programmed to activate the wire holder 3a and to control same (arrow K, Figure 4C) to reduce the sub-grazing-area 101a after it has been detected that the sub-grazing-area 101a has been consumed. The cattle can go, via passage 8, arrow X3, to the sub-grazing-area 101b which, if desired, can be increased by activation and control of wire holder 3c (arrow M). Swing gate 40a can in this case be in the opened position, while swing gate 40b only allows passage to outside via opening 9b. The count data are supplied to the control unit which, on the basis thereof, is able to determine the desired size of the sub-grazing-area 101 b.

During the passage of the cattle through the passage 8, it is possible to successively perform a milking on each of the animals while offering them the feed trough 22b and the use of the milking robot 15-17. The milk is stored in the milk storage 14. If desired, water can be supplied in a not shown manner to the animal from the storage container 11. After an animal has been milked, the feed trough is retracted for a while in order to free the passage 8 for that animal.

It is also possible to let the sub-grazing-areas 101 a,101 b for some time unchanged and to have the cattle V, for example after a stay of 24 hours, pass from the one sub-grazing-area to the other and vice versa, in each case in combination with a milking (Figure 4A). Upon displacing (arrow X1) the cattle from sub-grazing-area 101 a to sub-grazing-area 101 b, the swing gate 40a will be open and the swing gate 40b will be operative. Upon displacing (arrow X1) the cattle from sub-grazing-area 101 b to sub-grazing-area 101 a, the swing gate 40b will be open and the swing gate 40a will be operative. Depending on the direction of displacement, either the feed trough 22a or the feed trough 22b is used.

The assembly 1 may also be set to have the cattle undergo a milking without moving them to the other sub-grazing-area. Figure 4D shows that the cattle in sub-grazing-area 101 b, via an open swing gate 40b, goes to the passage 8 (arrow X4), in order to be milked there in milk stand 8d, in which case feed trough 22a is used. The feed trough 22a is not retracted after the animal has been milked, so that the animal can leave the milking station only through the opening 9b, to go to the sub-grazing-area 101 b.

Figure 4D also indicates that the other sub-area, here 101 c, can be used for segregating cattle. For this purpose, sliding door 27a has been shifted in front of opening 9a. As a result, the cattle cannot perceive the presence of the passage 8. When the cattle has to be moved from sub-area 101 c (which need not be intended as a grazing area, but for example substantially as a separation area) to another place, the control unit may activate the wire holder 3a and control same to reduce the sub-area 101 c while pushing the cattle in the direction of spacer arm 24a. In order to let the cattle go outside, it is possible to pivot the spacer arm 24a at the inner end about pivot 25a (direction P) while pivoting the portion of the arm 24a that is situated outside pivot 41 a downwards about pivot 41 a, so that the end of the arm, and thereby the place where wire 4a is kept, is kept vertically in place and the bent arm 24a forms a passage for cattle in the direction X5. If desired, the arms 24b and 24c may be controlled in the same manner, by the control unit or, possible, by manual operation.

An area which is separated from access to the milking station 2 may also be achieved by interconnecting the wire holders 3a and 3c of the arrangement of Figure 1 by means of a wire (not shown) corresponding to wires 4a-d.

The above description is given to illustrate the operation of preferred embodiments of the invention and not in order to limit the scope of the invention. On the basis of the above explanation, many variations which fall within the scope of the present invention, as defined in the appended claims, will be obvious to the person skilled in the art.

## Claims

1. Assembly (1) for delimiting a grazing area (101) for cattle, in particular dairy cattle, comprising at least three holders (2,3a,3b,3c) which are spaced apart and which are directly or indirectly interconnected by one or more delimiting elements (4a,4b,4c,4d,4e), such as wires, which are displaceable by the holders, wherein at least two of the holders are self-propelled and at least one of the holders is implemented as a milking station (2),
**characterized in that** the assembly comprises at least four holders (2,3a,3b,3c), wherein the holders (2,3a,3b,3c) with the delimiting elements extending therebetween define at least two separated sub-grazing-areas (101a,101b).

2. Assembly (1) according to claim 1, wherein the milking station (2) forms a passage (8) for the dairy cattle between both sub-grazing-areas (101a, 101b).

3. Assembly (1) according to claim 2, wherein the assembly (1) is provided with means (40a,40b) for establishing a selected one-way route for the dairy cattle through the passage (8) and/or is provided with means (27a,27b; 40a,40b) for closing an entrance to the milking station (2) from one selected sub-grazing-area (101a,101b) and with means for selectively operating the closing means (27a,27b; 40a,40b).

4. Assembly (1) according to any of the previous claims, wherein the milking station (2) is directly connected, by means of a delimiting element (4a,4d,4e), to at least two of the other holders, in particular to at least three of the other holders (3a,3b,3c).

5. Assembly (1) according to any one of the preceding claims, wherein the holders (2,3a,3b,3c) with the delimiting elements extending therebetween define at least one entirely separated grazing area, in particular a closed polygon.

6. Assembly (1) according to any one of the preceding claims, wherein the delimiting element (4a,4b,4c,4d,4e) is flexible and at least one of the holders is provided with means for hauling in/letting out a length of delimiting element and/or for tensioning the delimiting element.

7. Assembly (1) according to any one of the preceding claims, wherein at least one of the holders is provided with a programmable control unit (13) for mutually attuned activation and, preferably, also control of the self-propelled holders.

8. Assembly (1) according to claim 7, provided with means for determining the number of animals of the dairy cattle in a grazing area defined by the holders, wherein the control unit (13) is arranged to activate and control the self-propelled holders in dependence on the determined number.

9. Assembly according to claim 7 or 8, provided with means for determining the surface area of the grazing area defined by the holders, which means are operatively connected to the control unit (13), in particular wherein the means for determining the surface area of the grazing area defined by the holders comprise means, provided on one or more of the holders, for measuring the angle between delimiting elements emanating from the relevant holder and/or comprise means, provided on one or more of the holders, for measuring the distance between one or more pairs of holders, and/or comprise means, provided on one or more of the holders, for determining the position of the holder in the horizontal plane.

10. Assembly (1) according to claim 7, provided with means for determining a condition of the grazing land in a grazing area defined by the holders, wherein the control unit (13) is arranged to activate and control the self-propelled holders in dependence on the determined condition, wherein the means for determining a condition of the grazing land in a grazing area defined by the holders are in particular arranged to locally measure a value which is indicative of the amount of vegetation and/or to locally measure the height of the terrain and/or to measure the moisture content of the air or the ground.

11. Method of pasturing grazing land with dairy cattle, wherein a grazing area is enclosed by means of an assembly according to any one of the preceding claims, and the position of one or more of the self-propelled holders is adapted by activation of said holders.

12. Method according to claim 11, wherein the activation of the relevant holders takes place in dependence on a count of the number of animals of the cattle and/or in dependence on a measurement of the condition of the vegetation in the grazing area, in particular wherein the measured condition is the amount of vegetation or the moisture content of the air or the ground.

13. Method according to claim 11 or 12, wherein the mutual position of the holders is monitored and the activation of the holders takes place at least on the basis of these data.

14. Method according to any one of claims 11-13, wherein all the holders are self-propelled and are all activated for displacement together with the cattle which is enclosed by the assembly.

## Patentansprüche

1. Anordnung (1) zum Begrenzen einer Weidefläche (101) für Rinder, insbesondere Milchkühe, umfassend wenigstens drei Halter (2, 3a, 3b, 3c), welche zueinander beabstandet sind und welche direkt oder indirekt durch ein oder mehrere Begrenzungselemente (4a, 4b, 4c, 4d, 4e) wie Drähte verbunden sind, die durch die Halter versetzbar sind, wobei wenigstens zwei der Halter selbstangetrieben sind
und wenigstens einer der Halter als eine Melkstation (2) ausgeführt ist,
**dadurch gekennzeichnet, dass** die Anordnung wenigstens vier Halter (2, 3a, 3b, 3c) umfasst, wobei die Halter (2, 3a, 3b, 3c) mit den sich zwischen ihnen erstreckenden Begrenzungselementen wenigstens zwei getrennte Teilweideflächen (101a, 101b) definieren.

2. Anordnung (1) nach Anspruch 1,
wobei die Melkstation (2) einen Durchgang (8) für die Milchkühe zwischen beiden Teilweideflächen (101a, 101b) bildet.

3. Anordnung (1) nach Anspruch 2,
wobei die Anordnung (1) mit einer Vorrichtung (40a, 40b) zum Errichten einer gewählten Einwegstrecke für die Milchkühe durch den Durchgang (8) ausgestattet ist und/oder mit einer Vorrichtung (27a, 27b; 40a, 40b) zum Schließen eines Eingangs zur Melkstation (2) von einer gewählten Teilweidefläche (101a, 101b) und mit Mitteln zum gezielten Betätigen der Schließvorrichtung (27a, 27b; 40a, 40b) ausgestattet ist.

4. Anordnung (1) nach einem der vorhergehenden Ansprüche,
wobei die Melkstation (2) direkt durch ein Begrenzungselement (4a, 4d, 4e) mit wenigstens zwei der anderen Halter verbunden ist, insbesondere mit wenigstens drei der anderen Halter (3a, 3b, 3c).

5. Anordnung (1) nach einem der vorhergehenden Ansprüche,
wobei die Halter (2, 3a, 3b, 3c) mit den sich zwischen ihnen erstreckenden Begrenzungselementen wenigstens eine vollständig getrennte Weidefläche, insbesondere ein geschlossenes Polygon, definieren.

6. Anordnung (1) nach einem der vorhergehenden Ansprüche,
wobei das Begrenzungselement (4a, 4b, 4c, 4d, 4e) biegsam ist und wenigstens einer der Halter mit Mitteln zum Einziehen/Ausfahren einer Länge des Begrenzungselements und/oder zum Spannen des Begrenzungselements ausgestattet ist.

7. Anordnung (1) nach einem der vorhergehenden Ansprüche,
wobei wenigstens einer der Halter mit einer programmierbaren Steuereinheit (13) zur gemeinsam abgestimmten Betätigung und vorzugsweise auch Steuerung der selbstangetriebenen Halter ausgestattet ist.

8. Anordnung (1) nach Anspruch 7,
ausgestattet mit einer Vorrichtung zum Bestimmen der Anzahl an Milchkühen in einer Weidefläche, welche durch die Halter definiert ist, wobei die Steuereinheit (13) so angeordnet ist, um die selbstangetriebenen Halter in Abhängigkeit von der bestimmten Anzahl zu betätigen und zu steuern.

9. Anordnung nach Anspruch 7 oder 8,
ausgestattet mit einer Vorrichtung zum Bestimmen der Fläche der durch die Halter definierten Weidefläche, wobei diese Vorrichtung betriebsfähig mit der Steuereinheit (13) verbunden ist, wobei insbesondere die Vorrichtung zum Bestimmen der Fläche der durch die Halter definierten Weidefläche eine Einrichtung umfasst, welche auf einem oder mehreren der Halter vorgesehen ist, zum Messen des Winkels zwischen den Begrenzungselementen, die von dem jeweiligen Halter ausgehen, und/oder eine Einrichtung, welche auf einem oder mehreren Haltern vorgesehen ist, zum Messen des Abstands zwischen einem oder mehreren Paaren von Haltern umfasst und/oder eine Einrichtung, welche auf einem oder mehreren Haltern vorgesehen ist, zum Bestimmen der Position der Halter in der horizontalen Ebene umfasst.

10. Anordnung (1) nach Anspruch 7,
ausgestattet mit einer Vorrichtung zum Bestimmen eines Zustands des Weidelands in einer durch die Halter definierten Weidefläche, wobei die Steuereinheit (13) zum Betätigen und Steuern der selbstangetriebenen Halter in Abhängigkeit vom erfassten Zustand eingerichtet ist, wobei die Vorrichtung zum Bestimmen eines Zustands des Weidelands in einer durch die Halter definierten Weidefläche insbesondere so angeordnet ist, um am Ort einen Wert, welcher kennzeichnend für die Menge an Vegetation ist, zu messen und/oder um am Ort die Höhe des Geländes zu messen und/oder den Feuchtigkeitsgehalt der Luft oder des Bodens zu messen.

11. Verfahren des Abgrasens von Weideland mit Milchkühen, wobei eine Weidefläche mittels einer Anordnung nach einem beliebigen der vorhergehenden Ansprüche eingeschlossen ist und wobei die Position eines oder mehrerer der selbstangetriebenen Halter durch Betätigung dieser Halter angepasst wird.

12. Verfahren nach Anspruch 11,
wobei die Betätigung der jeweiligen Halter in Abhängigkeit von einer Zählung der Rinder und/oder in Abhängigkeit von einer Messung des Zustands der Vegetation in der Weidefläche stattfindet, insbesondere wobei der gemessene Zustand die Menge an Vegetation oder der Feuchtigkeitsgehalt der Luft oder des Bodens ist.

13. Verfahren nach Anspruch 11 oder 12,
wobei die gegenseitige Position der Halter überwacht wird und die Betätigung der Halter wenigstens auf der Grundlage dieser Daten stattfindet.

14. Verfahren nach einem der Ansprüche 11 bis 13,
wobei alle Halter selbstangetrieben sind und alle zum Versetzen gemeinsam mit den von der Anordnung eingeschlossenen Rindern, betätigt werden.

## Revendications

1. Ensemble (1) destiné à délimiter une zone de pâturage (101) pour du bétail, en particulier pour du bétail laitier, comprenant au moins trois supports (2, 3a, 3b, 3c) qui sont espacés et qui sont interconnectés de manière directe ou indirecte par un ou plusieurs éléments de délimitation (4a, 4b, 4c, 4d, 4e), tels que des fils, qui peuvent être déplacés par les supports, dans lequel deux au moins des supports sont autopropulsés et l'un au moins des supports est mis en oeuvre en tant que poste de traite (2),
**caractérisé en ce que** l'ensemble comprend au moins quatre supports (2, 3a, 3b, 3c), dans lequel les supports (2, 3a, 3b, 3c) avec les éléments de délimitation qui s'étendent entre eux définissent au moins deux zones de pâturage secondaires séparées (101a, 101b).

2. Ensemble (1) selon la revendication 1, dans lequel le poste de traite (2) forme un passage (8) pour le bétail laitier entre les deux zones de pâturage secondaires (101a, 101b).

3. Ensemble (1) selon la revendication 2, dans lequel l'ensemble (1) est doté de moyens (40a, 40b) destinés à établir un itinéraire à sens unique sélectionné pour le bétail laitier en empruntant le passage (8) et/ou est doté de moyens (27a, 27b ; 40a, 40b) destinés à fermer une entrée vers le poste de traite (2) à partir d'une zone de pâturage secondaire sélectionnée (101a, 101b) et de moyens destinés à actionner de manière sélective les moyens de fermeture (27a, 27b ; 40a, 40b).

4. Ensemble (1) selon l'une quelconque des revendications précédentes, dans lequel le poste de traite (2) est connecté de manière directe, au moyen d'un élément de délimitation (4a, 4d, 4e), à deux au moins des autres supports, en particulier à trois au moins des autres supports (3a, 3b, 3c).

5. Ensemble (1) selon l'une quelconque des revendications précédentes, dans lequel les supports (2, 3a, 3b, 3c) avec les éléments de délimitation qui s'étendent entre eux définissent au moins une zone de pâturage entièrement séparée, en particulier un polygone fermé.

6. Ensemble (1) selon l'une quelconque des revendications précédentes, dans lequel l'élément de délimitation (4a, 4b, 4c, 4d, 4e) est flexible et l'un au moins des supports est doté de moyens destinés à tirer/libérer une longueur d'élément de délimitation et/ou à tendre l'élément de délimitation.

7. Ensemble (1) selon l'une quelconque des revendications précédentes, dans lequel l'un au moins des supports est doté d'une unité de commande programmable (13) destinée à une activation mutuellement adaptée et, de préférence, également à une commande des supports autopropulsés.

8. Ensemble (1) selon la revendication 7, doté de moyens destinés à déterminer le nombre d'animaux du bétail laitier dans une zone de pâturage définie par les supports, dans lequel l'unité de commande (13) est agencée de façon à activer et à commander les supports autopropulsés selon le nombre déterminé.

9. Ensemble selon la revendication 7 ou la revendication 8, doté de moyens destinés à déterminer la superficie de la zone de pâturage définie par les supports, lesquels moyens sont connectés de manière opérationnelle à l'unité de commande (13), dans lequel en particulier, les moyens destinés à déterminer la superficie de la zone de pâturage définie par les supports comprennent des moyens, disposés sur un ou plusieurs des supports, destinés à mesurer l'angle entre les éléments de délimitation issus du support approprié et/ou comprennent des moyens, disposés sur un ou plusieurs des supports, destinés à mesurer la distance entre une ou plusieurs paires de supports, et/ou comprennent des moyens, disposés sur un ou plusieurs des supports, destinés à déterminer la position du support dans le plan horizontal.

10. Ensemble (1) selon la revendication 7, doté de moyens destinés à déterminer l'état de la terre de pâturage dans une zone de pâturage définie par les supports, dans lequel l'unité de commande (13) est agencée de façon à activer et à commander les supports autopropulsés selon l'état déterminé, dans lequel les moyens destinés à déterminer l'état de la terre de pâturage dans une zone de pâturage définie par les supports sont agencés en particulier de façon à mesurer localement une valeur qui est indicative de la quantité de végétation et/ou à mesurer localement la hauteur du terrain et/ou à mesurer la teneur en eau de l'air ou de la terre.

11. Procédé de pâturage d'une terre de pâturage par un bétail laitier, dans lequel une zone de pâturage est fermée à l'aide d'une ensemble selon l'une quelconque des revendications précédentes, et la position d'un ou de plusieurs des supports autopropulsés est adaptée par l'activation desdits supports.

12. Procédé selon la revendication 11, dans lequel l'activation des supports appropriés se fait selon un comptage du nombre d'animaux du bétail et/ou selon une mesure de l'état de la végétation dans la zone de pâturage, en particulier dans lequel l'état mesuré est la quantité de végétation ou la teneur en eau de l'air ou de la terre.

13. Procédé selon la revendication 11 ou la revendication 12, dans lequel la position mutuelle des supports est surveillée et l'activation des supports se fait au moins sur la base de ces données.

14. Procédé selon l'une quelconque des revendications 11 à 13, dans lequel tous les supports sont autopropulsés et sont tous activés pour un déplacement en même temps que le bétail qui est enfermé par l'ensemble.
